# EUROPEAN PATENT APPLICATION

(11) **EP 4 044 144 A2**
(43) Date of publication of application: **17.08.2022**
(21) Application number: 22180989.0
(22) Date of filing: 24.06.2022
(51) Int. Cl.: G08G 1/095, G08G 1/0962, G08G 1/0968, G06V 20/58, G01C 21/36

(54) **METHOD AND APPARATUS FOR PROVIDING PROMPT FOR TRAFFIC LIGHT, VEHICLE, AND ELECTRONIC DEVICE**

(30) Priority: 25.06.2021 CN 202110715836
(71) Applicant: Apollo Intelligent Connectivity (Beijing) Technology Co., Ltd., Beijing 100176 (CN)
(72) Inventor: Wu, Youcai, Beijing, 100176 (CN)
(74) Representative: Hoffmann Eitle

(57) **Abstract**

A method and an apparatus for providing a prompt for a traffic light, a vehicle, an electronic device, a storage medium and a program product are provided, relating to the field of computer technology, and in particular, to fields of intelligent traffic, image processing, etc. The method of providing a prompt for a traffic light includes: acquiring an image of the traffic light in response to a color deficiency mode being in an enabled state; recognizing a current color information of the traffic light in the image of the traffic light; and generating a prompt information based on the current color information, wherein the prompt information indicates at least a text information corresponding to the current color information.

## Description

### TECHNICAL FIELD

The present disclosure relates to a field of computer technology, and in particular, to fields of intelligent traffic, image processing, etc., and more specifically, to a method and an apparatus for providing a prompt for a traffic light, a vehicle, an electronic device, a medium and a program product.

### BACKGROUND

In a process of driving a vehicle, it is generally desired to recognize a color of a traffic light, so that a driving operation may be performed according to the color of the traffic light. However, in the related art, the driver is generally required to recognize the color of the traffic light by himself/herself, and it is difficult for the driver to ensure the accuracy of the color recognition, leading to potential safety hazards during driving.

### SUMMARY

The present disclosure provides a method and an apparatus for providing a prompt for a traffic light, a vehicle, an electronic device, a storage medium and a program product.

According to an aspect of the present disclosure, a method of providing a prompt for a traffic light is provided, including: acquiring an image of the traffic light in response to a color deficiency mode being in an enabled state; recognizing a current color information of the traffic light in the image of the traffic light; and generating a prompt information based on the current color information, wherein the prompt information indicates at least a text information corresponding to the current color information.

According to another aspect of the present disclosure, an apparatus for providing a prompt for a traffic light is provided, including an acquisition module, a recognition module and a first generation module. The acquisition module is configured to acquire an image of the traffic light in response to a color deficiency mode being in an enabled state. The recognition module is configured to recognize a current color information of the traffic light in the image of the traffic light. The first generation module is configured to generate a prompt information based on the current color information, wherein the prompt information indicates at least a text information corresponding to the current color information.

According to another aspect of the present disclosure, a vehicle is provided, including an In-vehicle Infotainment system, an image capturing apparatus and a display unit. The In-vehicle Infotainment system is configured to perform the method of providing a prompt for a traffic light described above. The image capturing apparatus is configured to receive an image capturing instruction from the In-vehicle Infotainment system, and capture an image of the traffic light based on the image capturing instruction. The display unit is configured to receive a prompt information from the In-vehicle Infotainment system, and display based on the prompt information.

According to another aspect of the present disclosure, an electronic device is provided, including at least one processor and a memory communicatively connected with the at least one processor. The memory stores instructions executable by the at least one processor, and the instructions, when executed by the at least one processor, cause the at least one processor to implement the method of providing a prompt for a traffic light described above.

According to another aspect of the present disclosure, a non-transitory computer-readable storage medium having computer instructions stored thereon is provided, wherein the computer instructions are configured to cause a computer to implement the method of providing a prompt for a traffic light described above.

According to another aspect of the present disclosure, a computer program product including a computer program is provided, wherein the computer program, when executed by a processor, causes the processor to implement the method of providing a prompt for a traffic light described above.

It should be understood that the content described in this section is not intended to identify key or critical features of embodiments of the present disclosure, nor is it intended to limit the scope of the present disclosure. Other features of the present disclosure will become readily understood from the following descriptions.

### BRIEF DESCRIPTION OF THE DRAWINGS

The accompanying drawings are used to better understand the present disclosure, rather than limiting the present disclosure, in which:
FIG. 1 schematically shows an application scenario to which a method and an apparatus for providing a prompt for a traffic light according to an embodiment of the present disclosure may be applied;
FIG. 2 schematically shows a flowchart of a method of providing a prompt for a traffic light according to an embodiment of the present disclosure;
FIG. 3 schematically shows a schematic diagram of prompt information according to an embodiment of the present disclosure;
FIG. 4 schematically shows a schematic diagram of prompt information according to another embodiment of the present disclosure;
FIG. 5 schematically shows a flowchart of a method of providing a prompt for a traffic light according to another embodiment of the present disclosure;
FIG. 6 schematically shows a block diagram of an apparatus for providing a prompt for a traffic light according to an embodiment of the present disclosure; and
FIG. 7 is a block diagram of an electronic device used to provide a prompt for a traffic light according to an embodiment of the present disclosure.

### DETAILED DESCRIPTION OF EMBODIMENTS

The exemplary embodiments of the present disclosure are described below with reference to the drawings, which include various details of the embodiments of the present disclosure to facilitate understanding, and which should be considered as merely illustrative. Therefore, those ordinary skilled in the art should realize that various changes and modifications may be made to the embodiments described herein without departing from the scope and spirit of the present disclosure. In addition, for clarity and conciseness, descriptions of well-known functions and structures are omitted in the following description.

In the description of the embodiments of the present disclosure, the term "including" and similar terms should be understood as open-ended inclusion, that is, "including but not limited to". The term "based on" should be understood as "at least partially based on." The term "an embodiment," "one embodiment" or "this embodiment" should be understood as "at least one embodiment." The terms "first," "second," and the like may refer to different or the same objects. The following may also include other explicit and implicit definitions.

All terms (including technical and scientific terms) used herein have the meaning as commonly understood by one of ordinary skill in the art, unless otherwise defined. It should be noted that the terms used herein should be construed to have meanings consistent with the context of the present specification, and should not be construed in an idealized or overly rigid manner.

In case that expressions like "at least one of A, B, and C, etc.," are used, they should generally be interpreted according to the meaning of the expression as commonly understood by those skilled in the art (for example, "a system having at least one of A, B and C" shall include, but is not limited to, a system having A alone, B alone, C alone, A and B, A and C, B and C, and/or A, B, C, etc.

An embodiment of the present disclosure provides a method of providing a prompt for a traffic light. In the method, an image of the traffic light is acquired in response to a color deficiency mode being in an enabled state. Then, a current color information of the traffic light is recognized in the image of the traffic light. Next, a prompt information is generated based on the current color information, wherein the prompt information indicates at least a text information corresponding to the current color information.

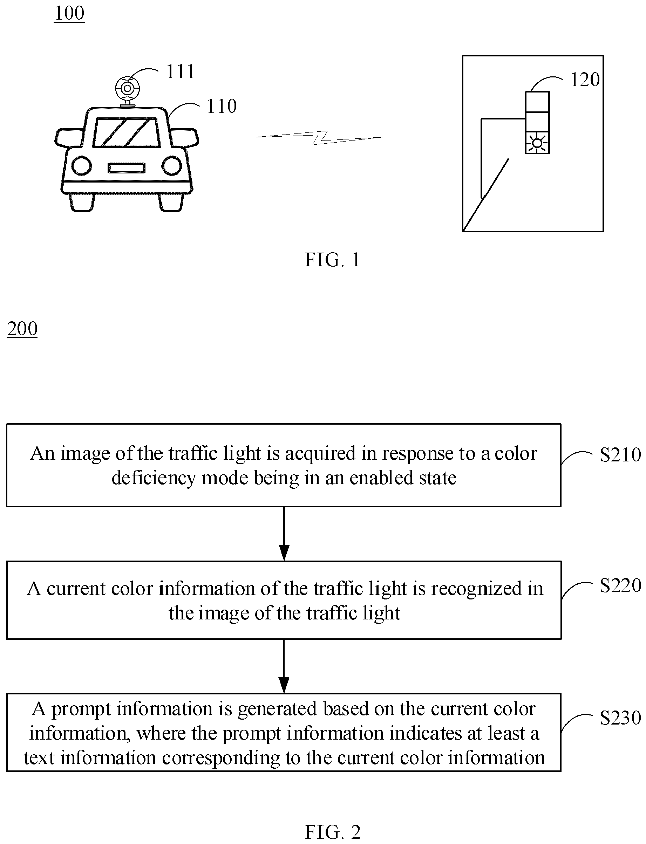

FIG. 1 schematically shows an application scenario to which a method and an apparatus for providing a prompt for a traffic light according to an embodiment of the present disclosure may be applied. It should be noted that FIG. 1 is only an example of an application scenario to which the embodiment of the present disclosure may be applied, so as to help those skilled in the art to understand a technical content of the present disclosure. It does not mean that the embodiment of the present disclosure is not applicable to other devices, systems, environments or scenarios.

As shown in FIG. 1, the application scenario 100 according to the embodiment may include a vehicle 110 and a traffic light 120.

The vehicle 110 includes, for example, an In-vehicle Infotainment (IVI) system, an image capturing apparatus 111 and a display unit. The In-vehicle Infotainment system may control the image capturing apparatus 111 to capture an image of the traffic light 120. In-vehicle Infotainment (IVI) system may include a memory and a processor. The image capturing apparatus 111 may be a camera. The display unit may be a display. In some embodiments, the In-vehicle Infotainment (IVI) system may include other element(s), for example but not limited to a communication component and an interface used to be connected to an external device such as a phone.

After the image of the traffic light is captured by the image capturing apparatus 111, the image may be transmitted to the In-vehicle Infotainment system, and image recognition is performed on the image of the traffic light by the In-vehicle Infotainment system to obtain a current color information of the traffic light. The current color information includes but not limited to red, green and yellow only. Alternatively, when the image capturing apparatus 111 has an image recognition function, it is also possible to perform the image recognition on the image of the traffic light by the image capturing apparatus 111 to obtain the current color information of the traffic light, and the recognized current color information is transmitted to the In-vehicle Infotainment system.

After the current color information is obtained, a prompt information may be generated for the current color information. The prompt information, for example, indicates a text information corresponding to the current color information. For example, taking the current color information as "green" as an example, the prompt information indicates a text "green", for example. The text "green" may be displayed by the display unit, so that the driver may obtain the current color information of the traffic light through the text.

It should be noted that, the method of providing a prompt for a traffic light provided by the embodiment of the present disclosure may be executed by the In-vehicle Infotainment system. Correspondingly, an apparatus for providing a prompt for a traffic light provided by the embodiment of the present disclosure may be provided in the In-vehicle Infotainment system.

The embodiment of the present disclosure provides a method of providing a prompt for a traffic light. The method of providing a prompt for a traffic light according to the exemplary embodiment of the present disclosure is described below with reference to FIGS. 2 to 5 in conjunction with the application scenario of FIG. 1.

FIG. 2 schematically shows a flowchart of a method of providing a prompt for a traffic light according to an embodiment of the present disclosure.

As shown in FIG. 2, the method 200 of providing a prompt for a traffic light according to the embodiment of the present disclosure may include, for example, operations S210 to S230.

In operation S210, an image of the traffic light is acquired in response to a color deficiency mode being in an enabled state.

In operation S220, a current color information of the traffic light is recognized in the image of the traffic light.

In operation S230, a prompt information is generated based on the current color information, where the prompt information indicates at least a text information corresponding to the current color information.

Exemplarily, when a driver with color deficiency intends to drive a vehicle, it is difficult for the driver to accurately recognize the color of a traffic light during driving, which leads to a potential safety hazard during driving. Color deficiency include, for example, color blindness, color weakness, and the like. Therefore, the vehicle is provided with a color deficiency mode for the driver with color deficiency. The vehicle may enable the color deficiency mode after receiving from the driver an enabling instruction for enabling the color deficiency mode.

After the color deficiency mode is enabled, the color deficiency mode is in the enabled state, at this time, the vehicle may acquire the image of the traffic light in real time. For example, the vehicle may capture the image of the traffic light through the image capturing apparatus. After the image of the traffic light is captured, the image recognition is performed on the image of the traffic light to obtain the current color information of the traffic light. The current color information includes, but is not limited to red, green, and yellow only.

After the current color information of the traffic light is obtained, the prompt information is generated based on the current color information. The prompt information, for example, includes the text information corresponding to the current color information. Alternatively, the prompt information indicates the text information corresponding to the current color information. For example, taking the current color information as "green" as an example, the text information corresponding to the current color information is, for example, the text "green", and the prompt information includes, for example, the text "green". Alternatively, the prompt information may further include an instruction used to brighten the pre-displayed text "green".

According to the embodiment of the present disclosure, the vehicle has a color deficiency mode for the driver with color deficiency, the color of the traffic light is recognized based on the color deficiency mode, and the prompt information for the text information is generated, so that the driver may obtain the current color of traffic light through the text. It should be understood that, according to the embodiment of the present disclosure, for a driver having difficulty to accurately recognize the color of the traffic light, the color deficiency mode is used to assist the driver for color recognition, improving a driving safety while improving the driver's use experience.

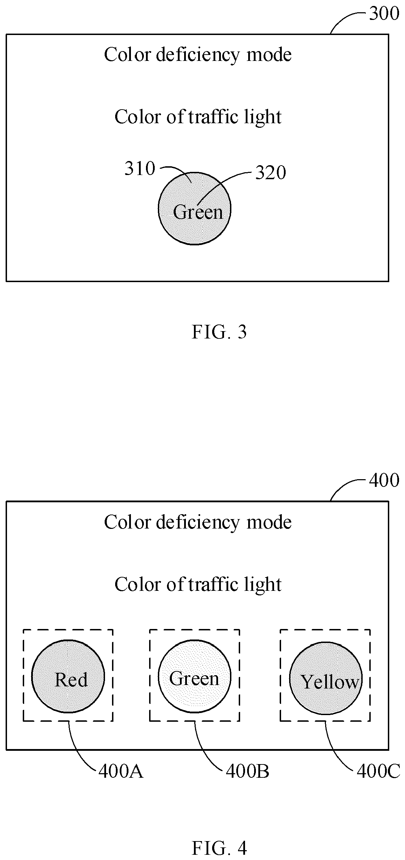

FIG. 3 schematically shows a schematic diagram of a prompt information according to an embodiment of the present disclosure.

As shown in FIG. 3, generating a prompt information based on a current color information includes: determining a text information corresponding to the current color information is determined, associating the current color information and the text information to abtain the prompt information, and then displaying the prompt information.

For example, the current color information of a traffic light obtained through image recognition is green, and the text information corresponding to the current color information is determined to be the text "green". The current color information and the text information are associated and displayed on a display unit 300 of the vehicle.

For example, the current color information 310 is the color "green", the text information 320 is the text "green", and the color "green" and the text "green" are associated and displayed.

According to the embodiment of the present disclosure, by displaying the color and the text in association with each other, the driver may be aware of the current color of the traffic light based on the combination of the color with the text, improving the accuracy of the color prompt to ensure the driving safety.

FIG. 4 schematically shows a schematic diagram of a prompt information according to another embodiment of the present disclosure.

As shown in FIG. 4, the prompt information includes a display style adjustment instruction. Generating the prompt information based on a current color information includes: determining a target content from a plurality of candidate contents based on the current color information, and generating a display style adjustment instruction for adjusting the target content.

For example, each of a plurality of candidate contents 400A, 400B, 400C includes a candidate color information and a text information corresponding to the candidate color information. Each candidate is displayed in a first display style before recognizing the current color of the traffic light. Taking the current color information of the traffic light being "green" as an example, the candidate content 400B is determined from the plurality of candidate contents 400A, 400B, 400C as the target content based on the current color information. The candidate color information in the target content is the same as the current color information of the traffic light, for example, both are "green".

After the target content is determined, a display style adjustment instruction for adjusting the target content is generated by the vehicle. The display style adjustment instruction is used to instruct to display the target content in a second display style, that is, the display style of the target content is switched from the first display style to the second display style. For example, the second display style is different from the first display style. For example, the second display style includes a display style in which the target content is brightened, or a display style in which the text "green" in the target content is thicken and/or enlarged, and so on. In other words, the plurality of candidate contents 400A, 400B, 400C are displayed on the display unit 400 in the first display style in advance, and after the current color information of the traffic light is determined, the corresponding target content is displayed in the prominent second display style, so that the driver may obtain the current color information of the traffic light from the target content.

According to the embodiment of the present disclosure, by associating the color with the text and displaying the color in associated with the text in the prominent second display style, it is convenient for the driver to obtain the current color of the traffic light in time, thereby ensuring the driving safety.

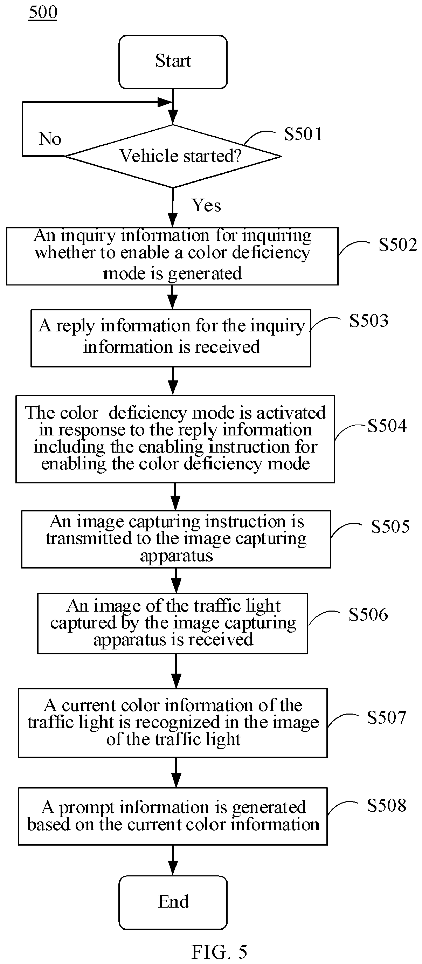

FIG. 5 schematically shows a flowchart of a method of providing a prompt for a traffic light according to another embodiment of the present disclosure.

As shown in FIG. 5, the method 500 of providing a prompt for a traffic light according to the embodiment of the present disclosure may, for example, include operations S501 to S508.

In operation S501, it is determined whether the vehicle is started. If the vehicle is started, operation S502 is performed; and if the vehicle is not started, the process is returned to operation S501.

In operation S502, an inquiry information for inquiring whether to enable a color deficiency mode is generated in response to starting of the vehicle is detected.

Exemplarily, the inquiry information may be displayed on the display unit of the vehicle, or the inquiry information may be an inquiry voice.

In operation S503, a reply information for the inquiry information is received, where the reply information includes an enabling instruction for enabling the color deficiency mode or a refusal instruction for refusing to enable the color deficiency mode.

Exemplarily, the reply information may include, for example, a click operation or a touch operation performed by the driver on the display unit, and the click operation or touch operation is used to select to enable the color deficiency mode or refuse to enable the color deficiency mode.

Exemplarily, the reply information may further include a voice information from the driver, where the voice information includes an enabling instruction for enabling the color deficiency mode or a refusal instruction for refusing to enable the color deficiency mode.

In operation S504, the color deficiency mode is enabled in response to the reply information including the enabling instruction for enabling the color deficiency mode.

Exemplarily, after the reply information is received, the color deficiency mode is enabled if the reply information includes the enabling instruction for enabling the color deficiency mode.

In operation S505, an image capturing instruction is transmitted to the image capturing apparatus in response to the color deficiency mode being in the enabled state.

In operation S506, an image of the traffic light captured by the image capturing apparatus is received.

In operation S507, a current color information of the traffic light is recognized in the image of the traffic light.

In operation S508, a prompt information indicating at least a text information corresponding to the current color information is generated based on the current color information.

According to the embodiment of the present disclosure, the vehicle may automatically inquire the driver whether to enable the color deficiency mode, such that a complexity of the driver's operation may be reduced and the driver's use experience is improved. The vehicle has a color deficiency mode for the driver with color deficiency. The color of the traffic light is recognized based on the color deficiency mode, and the prompt information for the text information is generated, so that the driver may timely obtain the current color of traffic light through the text, improving the driving safety.

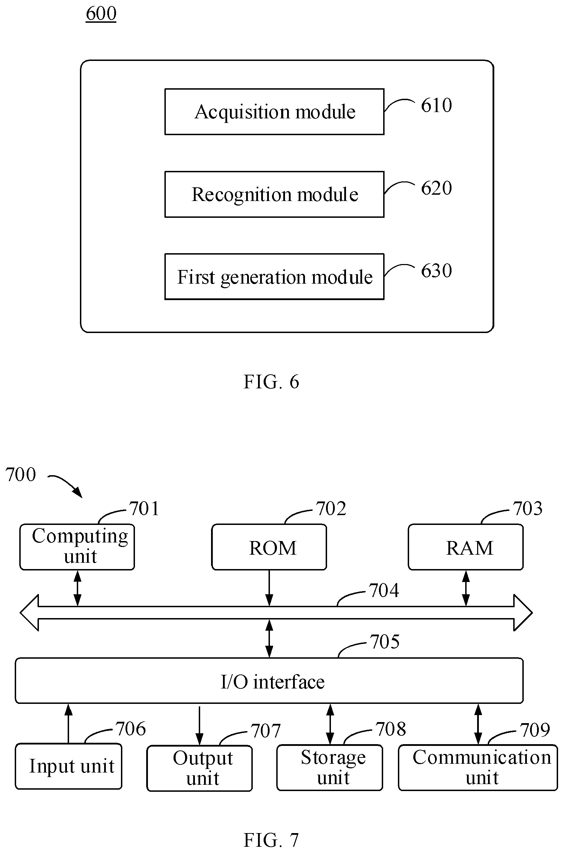

FIG. 6 schematically shows a block diagram of an apparatus for providing a prompt for a traffic light according to an embodiment of the present disclosure.

As shown in FIG. 6, the apparatus 600 for providing a prompt for a traffic light according to the embodiment of the present disclosure includes, for example, an acquisition module 610, a recognition module 620, and a first generation module 630.

The acquisition module 610 may be used to acquire an image of the traffic light in response to a color deficiency mode being in an enabled state. According to the embodiment of the present disclosure, the acquisition module 610 may, for example, perform the operation S210 described above with reference to FIG. 2, which will not be repeated here.

The recognition module 620 may be used to recognize a current color information of the traffic light in the image of the traffic light. According to the embodiment of the present disclosure, the recognition module 620 may, for example, perform the operation S220 described above with reference to FIG. 2, which will not be repeated here.

The first generation module 630 may be used to generate a prompt information based on the current color information. The prompt information indicates at least a text information corresponding to the current color information. According to the embodiment of the present disclosure, the first generation module 630 may, for example, perform the operation S230 described above with reference to FIG. 2, which will not be repeated here.

According to the embodiment of the present disclosure, the first generation module 630 includes: a first determination sub-module and a second determination sub-module. The first determination sub-module is used to determine the text information corresponding to the current color information; the second determination sub-module is used to associate the current color information with the text information as the prompt information.

According to the embodiment of the present disclosure, the prompt information includes a display style adjustment instruction; and the first generation module 630 includes: a third determination sub-module and a generation sub-module. The third determination sub-module is used to determine a target content from a plurality of candidate contents based on the current color information, wherein each candidate content is displayed in a first display style, each candidate content includes a candidate color information and a candidate text information corresponding to the candidate color information, and the candidate color information in the target content is the same as the current color information; the generation sub-module is used to generate the display style adjustment instruction for adjusting the target content, wherein the display style adjustment instruction is used to instruct the target content to be displayed in a second display style.

According to the embodiment of the present disclosure, the apparatus 600 may further include: a second generation module, a receiving module, and an enabling module. The second generation module is used to generate an inquiry information for inquiring whether to enable the color deficiency mode in response to starting of the vehicle is detected; the receiving module is used to receive a reply information to the inquiry information, wherein the reply information includes an enabling instruction for enabling the color deficiency mode or a refusal instruction for refusing to enable the color deficiency mode; the enabling module is used to enable the color deficiency mode in response to the reply information including the enabling instruction for enabling the color deficiency mode.

According to the embodiment of the present disclosure, the acquisition module 610 includes: a transmitting sub-module and a receiving sub-module. The transmitting sub-module is used to transmit an image capturing instruction to the image capturing apparatus; and the receiving sub-module is used to receive the image of the traffic light captured from the image capturing apparatus.

Collecting, storing, using, processing, transmitting, providing, and disclosing etc. of the personal information of the user involved in the present disclosure all comply with the relevant laws and regulations, are protected by essential security measures, and do not violate the public order and morals. According to the present disclosure, personal information of the user is acquired or collected after such acquirement or collection is authorized or permitted by the user..

According to the embodiment of the present disclosure, the present disclosure also provides an electronic device, a readable storage medium, and a computer program product.

FIG. 7 is a block diagram of an electronic device used to implement a prompt for a traffic light according to the embodiment of the present disclosure.

FIG. 7 shows a schematic block diagram of an electronic device 700 that may be used to implement the embodiments of the present disclosure. The electronic device 700 is intended to represent various forms of digital computers, such as a laptop computer, a desktop computer, a workstation, a personal digital assistant, a server, a blade server, a mainframe computer, and other suitable computers. The electronic device may also represent various forms of mobile apparatuses, such as a personal digital processor, a cellular phone, a smart phone, a wearable device, and other similar computing apparatuses. The components shown herein, connections and relationships thereof, and functions thereof are by way of example only, and are not intended to limit implementations of the present disclosure described and/or claimed herein.

As shown in FIG. 7, the device 700 includes a computing unit 701, the computing unit is capable of performing various suitable actions and processing based on a computer program stored in a read-only memory (ROM) 702 or a computer program uploaded to a random-access memory (RAM) 703 from a storage unit 708. In the RAM 703, various programs and data required for the operation of the electronic device 700 may also be stored. The computing unit 701, the ROM 702, and the RAM 703 are connected to each other through a bus 704. An input/output (I/O) interface 705 is also connected to the bus 704.

A plurality of components in the electronic device 700 are connected to the I/O interface 705, including: an input unit 706, such as a keyboard, a mouse, etc.; an output unit 707, such as various types of displays, speakers, etc.; a storage unit 708, such as a magnetic disk, an optical disk, etc.; and a communication unit 709, such as a network card, a modem, a wireless communication transceiver, and the like. The communication unit 709 enables the device 700 to exchange information/data with other devices through a computer network such as the Internet and/or various telecommunication networks.

The computing unit 701 may be various general-purpose and/or special-purpose processing components with processing and computing capabilities. Some examples of the computing unit 701 include, but are not limited to, a central processing unit (CPU), a graphics processing unit (GPU), various specialized artificial intelligence (AI) computing chips, various computing units running machine learning model algorithms, a digital signal processing processor (DSP), and any suitable processor, controller, microcontroller, etc. The computing unit 701 is used to execute the various methods and processing described above, such as the method of providing a prompt for a traffic light. For example, in some embodiments, the method of providing a prompt for a traffic light may be implemented as a computer software program tangibly embodied on a machine-readable medium, such as the storage unit 708. In some embodiments, part or all of the computer program may be loaded and/or installed on the device 700 via the ROM 702 and/or the communication unit 709. When the computer program is loaded to RAM 703 and executed by the computing unit 701, one or more steps of the above-described method of providing a prompt for a traffic light may be performed. Alternatively, in other embodiments, the computing unit 701 may be configured by any other suitable means (e.g., by means of firmware) to perform the method of providing a prompt for a traffic light.

The embodiments of the system and technique described above may be implemented in a digital electronic circuit, an integrated circuit system, a field programmable gate array (FPGA), an application specific integrated circuit (ASIC), an application specific standard product (ASSP), a system-on-a-chip (SOC), a complex programmable logic device (CPLD), computer hardware, firmware, software, and/or a combination thereof. These various implementations may include: being implemented in one or more computer programs executable and/or interpretable on a programmable system including at least one programmable processor. The programmable processor may be a special-purpose or general-purpose programmable processor, the programmable processor may receive data and instructions from a storage system, at least one input apparatus, and at least one output apparatus, and transmit data and instructions to the storage system, the at least one input apparatus, and the at least one output apparatus.

Program codes for implementing the method of the present disclosure may be written in any combination of one or more programming languages. The program codes may be provided to a processor or controller of a general-purpose computer, a special-purpose computer or other programmable data processing apparatuses, such that when executed by the processor or controller, the program codes enables functions/operations specified in the flowchart and/or block diagram to be implemented. The program codes may be executed entirely on the machine, partly on the machine, partly on the machine and partly on a remote machine as a stand-alone software package or entirely on the remote machine or server.

In the context of the present disclosure, a machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an one or more wire-based electrical connection, a portable computer disk, a hard disk, a random access memory (RAM), a read only memory (ROM), an erasable programmable read only memory (EPROM or flash memory), an optical fiber, a compact disk read only memory (CD-ROM), an optical storage device, a magnetic storage device, or any suitable combination thereof.

To provide an interaction with a user, the system and technique described herein may be implemented on a computer having: a display apparatus (e.g., a CRT (cathode ray tube) or an LCD (liquid crystal display) monitor) for displaying information to the user; and a keyboard and pointing apparatus (e.g., a mouse or trackball) through which the user may provide input to the computer. Other types of apparatuses may also be used to provide the interaction with the user. For example, a feedback provided to the user may be any form of sensory feedback (e.g., visual feedback, auditory feedback, or tactile feedback); and may receive input in any form (including acoustic input, voice input, or tactile input) from the user.

The system and technique described herein may be implemented on a computing system including back-end components (e.g., as a data server), or a computing system including middleware components (e.g., an application server), or a computing system including front-end components (e.g., a user's computer with a graphical user interface or a web browser through which the user may interact with implementations of the system and technique described herein), or a computing system including any combination of such back-end components, middleware components, or front-end components. The components of the system may be interconnected by any form or medium of digital data communication (e.g., a communication network). Examples of the communication network includes: a Local Area Network (LAN), a Wide Area Network (WAN), and the Internet.

A computer system may include a client and a server. The client and the server are generally remote from each other and usually interact through a communication network. A relationship between the client and the server is generated by computer programs running on respective computers and having a client-server relationship to each other. The server may be a cloud server, or a server of a distributed system, or a server combined with a block chain.

It should be understood that steps may be reordered, added or deleted using the various forms of the flow shown above. For example, the steps described in the present disclosure may be executed in parallel, sequentially, or in different orders, as long as the desired result of the technical solution disclosed in the present disclosure may be achieved, which is not limited herein.

The above-mentioned specific embodiments do not constitute a limitation to the protection scope of the present disclosure. It should be understood by those skilled in the art that various modifications, combinations, sub-combinations and substitutions may occur depending on design requirements and other factors. Any modifications, equivalent replacements and improvements made within the spirit and principles of the present disclosure shall be included within the protection scope of the present disclosure.

## Claims

1. A method (200) of providing a prompt for a traffic light, comprising:
acquiring (S210) an image of the traffic light in response to a color deficiency mode being in an enabled state;
recognizing (S220) a current color information of the traffic light in the image of the traffic light; and
generating (S230) a prompt information based on the current color information, wherein the prompt information indicates at least a text information corresponding to the current color information.

2. The method according to claim 1, wherein the generating a prompt information based on the current color information comprises:
determining the text information corresponding to the current color information; and
associating the current color information with the text information to obtain the prompt information.

3. The method according to claim 1 or 2, wherein the prompt information comprises a display style adjustment instruction; and the generating a prompt information based on the current color information comprises:
determining a target content from a plurality of candidate contents based on the current color information, wherein each candidate content is displayed in a first display style, each candidate content comprises a candidate color information and a candidate text information corresponding to the candidate color information, and the candidate color information in the target content is the same as the current color information; and
generating the display style adjustment instruction configured to adjust the target content, wherein the display style adjustment instruction is configured to instruct to display the target content in a second display style.

4. The method according to any of claims 1-3, further comprising:
generating (502) an inquiry information for inquiring whether to enable the color deficiency mode in response to starting of the vehicle is detected;
receiving (503) a reply information for the inquiry information, wherein the reply information comprises an enabling instruction for enabling the color deficiency mode or a refusal instruction for refusing to enable the color deficiency mode; and
enabling (504) the color deficiency mode in response to the reply information comprising the enabling instruction for enabling the color deficiency mode.

5. The method according to any of claims 1-4, wherein the acquiring an image of the traffic light comprises:
transmitting (S505) an image capturing instruction to an image capturing apparatus; and
receiving (S506) the image of the traffic light captured by the image capturing apparatus.

6. An apparatus (600) for providing a prompt for a traffic light, comprising:
an acquisition module (610) configured to acquire an image of the traffic light in response to a color deficiency mode being in an enabled state;
a recognition module (620) configured to recognize a current color information of the traffic light in the image of the traffic light; and
a first generation module (630) configured to generate a prompt information based on the current color information, wherein the prompt information indicates at least a text information corresponding to the current color information.

7. The apparatus according to claim 6, wherein the first generation module comprises:
a first determination sub-module configured to determine the text information corresponding to the current color information; and
a second determination sub-module configured to associate the current color information with the text information to obtain the prompt information.

8. The apparatus according to claim 6 or 7, wherein the prompt information comprises a display style adjustment instruction; and the first generation module comprises:
a third determination sub-module configured to determine a target content from a plurality of candidate contents based on the current color information, wherein each candidate content is displayed in a first display style, each candidate content comprises a candidate color information and a candidate text information corresponding to the candidate color information, and the candidate color information in the target content is the same as the current color information; and
a generation sub-module configured to generate the display style adjustment instruction for adjusting the target content, wherein the display style adjustment instruction is configured to instruct to display the target content in a second display style.

9. The apparatus according to any of claims 6-8, further comprising:
a second generation module configured to generate an inquiry information for inquiring whether to enable the color deficiency mode in response to starting of the vehicle is detected;
a receiving module configured to receive a reply information for the inquiry information, wherein the reply information comprises an enabling instruction for enabling the color deficiency mode or a refusal instruction for refusing to enable the color deficiency mode; and
an enabling module configured to enable the color deficiency mode in response to the reply information comprising the enabling instruction for enabling the color deficiency mode.

10. The apparatus according to any of claims 6-9, wherein the acquisition module comprises:
a transmitting sub-module configured to transmit an image capturing instruction to the image capturing apparatus; and
a receiving sub-module configured to receive the image of the traffic light captured by the image capturing apparatus.

11. A vehicle (110), comprising:
an In-vehicle Infotainment system configured to perform the method according to any of claims 1-5;
an image capturing apparatus (111) configured to receive an image capturing instruction from the In-vehicle Infotainment system, and capture an image of the traffic light based on the image capturing instruction; and
a display unit configured to receive a prompt information from the In-vehicle Infotainment system, and display based on the prompt information.

12. An electronic device (700), comprising:
at least one processor (701); and
a memory (708) communicatively connected with the at least one processor (701);
wherein the memory (708) stores instructions executable by the at least one processor (701), and the instructions, when executed by the at least one processor (701), cause the at least one processor (701) to implement the method of any one of claims 1 to 5.

13. The electronic device according to claim 12, wherein the electronic device is an In-Vehicle Infotainment system.

14. A non-transitory computer-readable storage medium having computer instructions stored thereon, wherein the computer instructions are configured to cause a computer to implement the method according to any one of claims 1 to 5.

15. A computer program product comprising a computer program, wherein the computer program, when executed by a processor, causes the processor to implement the method of any one of claims 1 to 5.
